**Europäisches Patentamt**

**European Patent Office**

**Office européen des brevets**

(19)

(11) Veröffentlichungsnummer : **0 125 337**
**B1**

(12)

# EUROPÄISCHE PATENTSCHRIFT

(45) Veröffentlichungstag der Patentschrift :
09.09.87

(51) Int. Cl.⁴ : **B 62 B   1/12**

(21) Anmeldenummer : **83107194.9**

(22) Anmeldetag : **22.07.83**

(54) **Transportroller.**

(30) Priorität : **11.05.83 EP 83104658**

(43) Veröffentlichungstag der Anmeldung :
**21.11.84 Patentblatt 84/47**

(45) Bekanntmachung des Hinweises auf die Patenterteilung : **09.09.87 Patentblatt 87/37**

(84) Benannte Vertragsstaaten :
**AT BE CH DE FR GB IT LI NL SE**

(56) Entgegenhaltungen :
**FR-A-   956 119**
**FR-A- 2 098 911**
**GB-A-   664 569**
**US-A- 2 439 992**
**US-A- 2 757 935**
**US-A- 2 872 202**

(73) Patentinhaber : **LEIFHEIT Aktiengesellschaft**
**Leifheitstrasse**
**D-5408 Nassau/Lahn (DE)**

(72) Erfinder : **Liebscher, Johannes**
**Dr. Haupt-Weg**
**D-5408 Nassau/Lahn (DE)**
Erfinder : **Ohm, Heinz**
**Grosser Ring 5**
**D-6250 Limburg 9 (DE)**

## Beschreibung

Die Erfindung bezieht sich auf einen aus der US-A-2 439 992 bekannten Transportroller gemäß dem Oberbegriff des Anspruchs 1.

Derartige Transportroller werden hauptsächlich von Hausfrauen zum Einkauf benutzt. Sie bestehen in aller Regel im wesentlichen aus einem mit einem Handgriff versehenen Griffholm, an dessen unterem Ende ein mit Laufrollen versehenens Trägerteil zur Aufnahme einer Tasche angelenkt ist. Häufig ist es aber auch erwünscht, mit einem derartigen Transportroller eine Kiste mit Flaschen oder auch Koffer und sonstiges Transportgut zu befördern. Dabei sollte die hauptsächlich benutzte, eingehängte Tasche so ausgebildet sein, daß das Trägerteil schnell verfügbar ist. Ein derartiger Transportroller wurde zum Beispiel durch das DE-U-18 17 720 bekannt. Nachteilig an diesem Transportroller ist aber, daß bei einer Verwendung ohne Tasche diese entfernt werden muß oder unter das andere zu transportierende Gut zu liegen kommt, wodurch sie leicht beschmutzt oder so gar beschädigt werden kann.

Weiter ist durch die US-A-2 439 992 ein Transportroller bekannt, der mit einem kistenförmigen Trägerteil zur Aufnahme eines faltbaren Behälters versehen ist. Der Behälter ist dabei oberendig starr am Griffholm befestigt und liegt anderendig lose im Trägerteil. Das Gerät ist nur mit Behälter als Einheit einsatzfähig. Der Behälter ist im Trägerteil lose eingelegt und nimmt somit nach dem Aufklappen des Transportrollers eine nicht definierte, durch Knickfalten beladeunfreundliche Stellung ein.

Aufgabe der Erfindung ist es deshalb, einen Transportroller zu schaffen, dessen Trägerteil so ausgebildet ist, daß schnell und mit wenigen Handgriffen unterschiedliches Transportgut befördert werden kann, wobei der hauptsächlich zu verwendende Behälter beschädigungsfrei und verschmutzungssicher mit untergebracht werden kann.

Dies wird erfindungsgemäß durch einen Transportroller mit den Merkmalen des Anspruchs 1 erfüllt. Durch die Ausbildung des Trägerteiles als Wanne sowie der faltbaren Ausführung des Behälters, wobei der Behälter in die Wanne eingefaltet wird, wird ein schneller Wechsel für unterschiedliches Transportgut möglich. In eingefaltetem Zustand des Behälters übersteht dieser dabei nicht die Wanne und es kann ohne Gefahr der Beschädigung des Behälters auf der Wanne sperriges Transportgut abgelegt werden.

Eine weitere Verbesserung bringt in Ausgestaltung der Erfindung die Abdeckung der Wanne mittels eines Deckels gemäß den Merkmalen des Anspruchs 2. Dadurch wird der eingefaltete Behälter nicht nur vor Beschädigungen sondern auch vor Verschmutzung geschützt. Die Auflagefläche wird homogen, das optische Aussehen ist deutlich verbessert.

Weitere Ausgestaltungen der Erfindung sind den nächsten Unteransprüchen zu entnehmen.

So wird gemäß den Merkmalen des Anspruchs 3 eine besonders einfache Handhabung dadurch erreicht, daß der Behälter an dem oberen Teil eines teleskopierbaren, beziehungsweise faltbaren Griffholms mit befestigt wird. Beim Ausfahren des Griffholms in Gebrauchsstellung wird dabei automatisch der Behälter mit entfaltet. Umgekehrt wird der Behälter beim Verstauen des Transportrollers automatisch eingefaltet. Die eingerastete steife Bodenschale hält den Behälter beim Entfalten sicher in der Wanne. Der Behälter, soll er als Einkaufstasche verwendet werden, ist durch nach vorne Ziehen leicht zu entfernen ; er ist durch die steife Bodenschale sehr formstabil.

Eine weitere Steigerung bringt die Zwischenschaltung des Deckels zwischen den Behälter und den Griffholm gemäß den Merkmalen des Anspruchs 5. Liegt der Deckel in direktem Schwenkbereich zur Wanne am Griffholm, erübrigt sich beim Einfalten jede Korrektur. Der Deckel wird immer exakt auf die Wanne zu liegen kommen. Soll nur der Behälter eingefaltet werden, um zum Beispiel sperriges Gut zu transportieren, kann der Deckel leicht vom Griffholm abgenommen und auf die Wanne aufgelegt werden.

Ein Ausführungsbeispiel der Erfindung wird im folgenden an Hand der Zeichnungen näher erläutert.

Es zeigen :

Figur 1 einen faltbaren Transportroller mit gestrichelt dargesteltem Behälter in Gebrauchsstellung,

Figur 2 den Transportroller in Aufbewahrungsstellung,

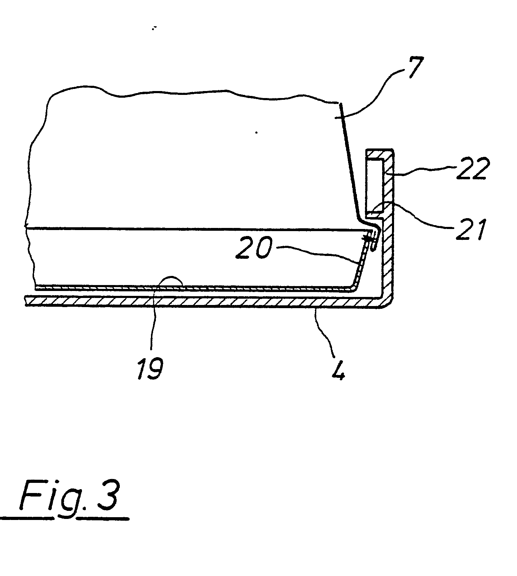

Figur 3 einen Schnitt gemäß der Linie III-III in Fig. 1 und

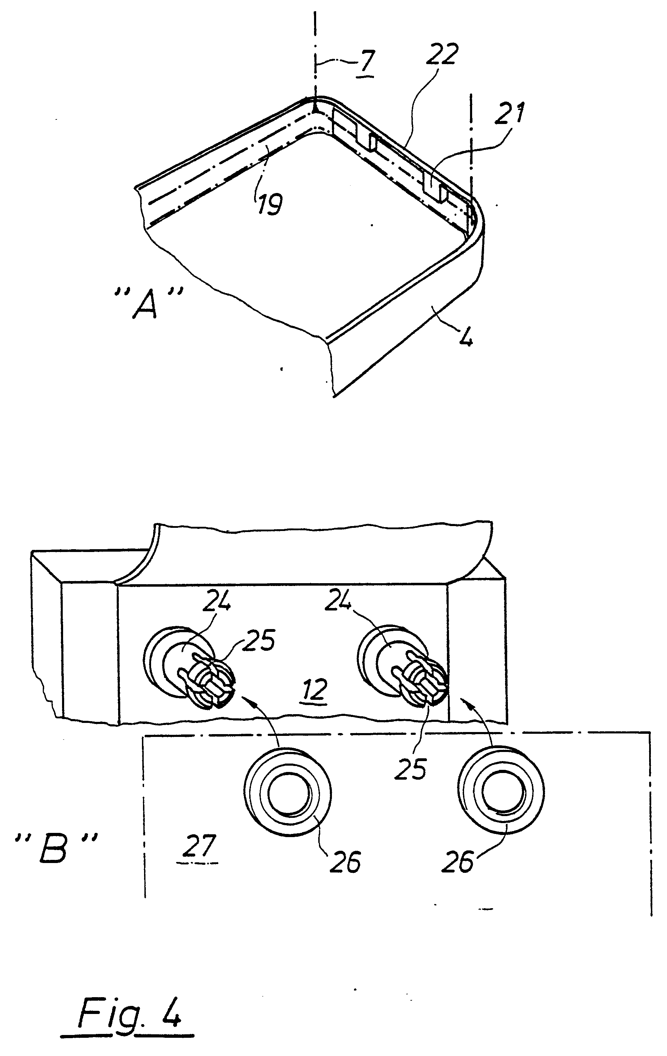

Figur 4 Detailansichten « A » und « B » nach Fig. 1.

An einem Griffholm 1 mit Handgriff 2 sind an dessen unterem Ende 3 ein Trägerteil 4 sowie über eine Achse 5 Laufrollen 6 angelenkt. Das Trägerteil 4 ist als Wanne ausgebildet und nimmt einen Behälter 7 auf.

Der Griffholm besteht aus einem unteren Teil 8, das um eine Schwenkachse 9 nach vorne zu schwenken ist, dem damit über ein Gelenk 10 verbundenen Mittelteil 11 sowie einem Verriegelungsteil 12, das über ein Filmscharnier 13 mit einem Griffteil 14, an das sich der Handgriff 2 anschließt, verbunden ist.

An dem Verriegelungsteil 12 ist über eine Halterung 15 der Behälter 7 lösbar befestigt. Zur Versteifung in seinem unteren Bereich, sowie zur Abdeckung der Wanne 4 ist im direkten Schwenkberbereich 16 zur Wanne 4 ein Deckel 17 am unteren Teil 8 des Griffholms 1 lösbar gehalten.

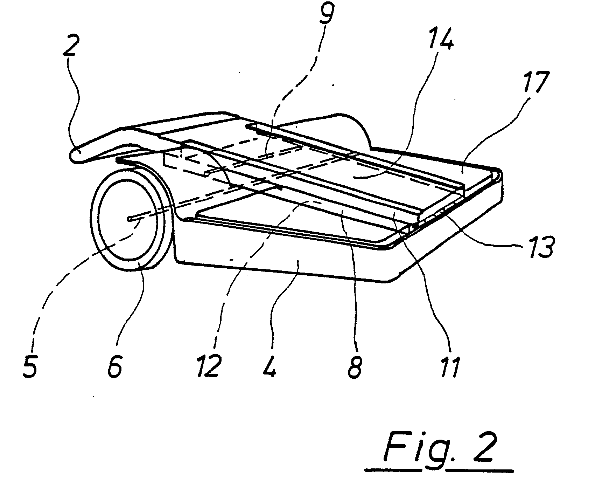

Zum Überführen des Transportrollers in die Aufbewahrungsstellung gemäß Fig. 2 wird der Griffholm über eine nicht dargestellte Verriegelung entriegelt. Das Griffteil 14 wird eingeschoben, bis das Filmscharnier 13 über das Gelenk 10 zu liegen kommt ; danach kann das Griffteil mit dem Mittelteil nach hinten geknickt werden, während das untere Teil 8 über die Schwenkachse 9 in Richtung der Wanne 4 geschwenkt wird. Der Behälter, der über die Halterung 15 am oberen Ende des Verriegelungsteiles 12 befestigt ist, wird durch den Einschiebevorgang des Griffteiles 14 gefaltet und legt sich beim Vorschwenken des unteren Teiles 9 in die Wanne 4, wo er durch den Deckel 17 abgedeckt wird.

Der Behälter 7, zweckmäßigerweise aus Stoff gefertigt, aber auch ein Stahl- beziehungsweise Kunststoffgitter ist möglich, ist etwa mittig mit einer Faltprägung 18 versehen. Den unteren Abschluß bildet eine steife Bodenschale 19, deren Vorderwand 20 unter eine Rasteinrichtung 21 an der Frontwand 22 der Wanne 4 eingeschwenkt ist.

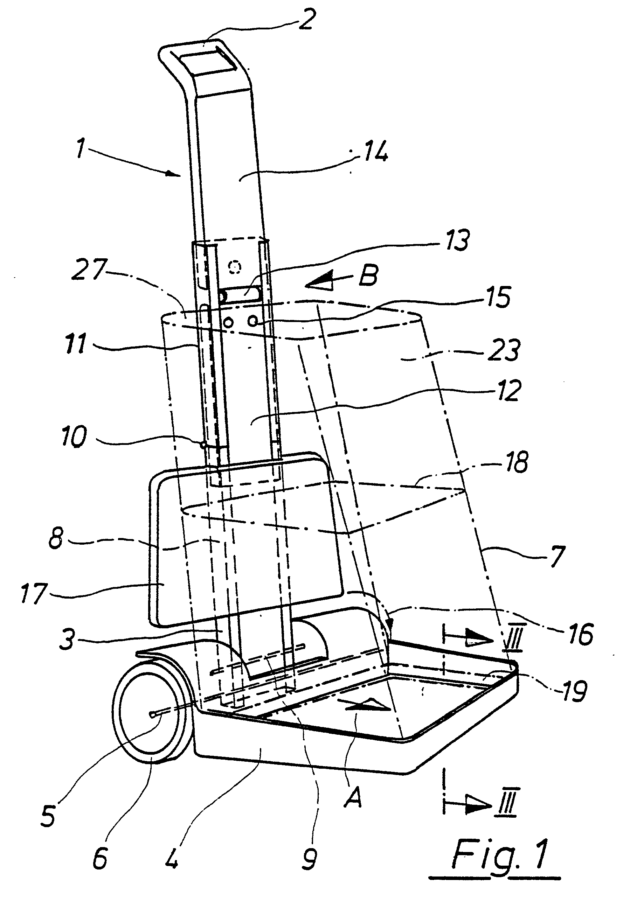

Beim Entfalten des Transportrollers, also beim Überführen aus der Stellung gemäß Fig. 2 nach einer Stellung gemäß Fig. 1, wird der Behälter 7 über die Bodenschale 19 in der Wanne 4 gehalten und mit seinem Oberteil 23 mittels der Halterung 15 mit dem Verriegelungsteil 12 hochgezogen und entfaltet. Die Halterung 15 besteht aus an das Verriegelungsteil 12 angeformten Hohlpilzen 24 mit Schlitzen 25. Diese Hohlpilze 24 wirken mit ösen 26 in der Rückwand 27 des Behälters 7 kraftschlüssig zusammen. Durch diese Halterung kann eine große Kraft in Richtung Entfalten übertragen werden ; dagegen läßt sich der Behälter 7 relativ leicht nach vorne losreißen ; durch weiteres Kippen wird der Behälter auch aus der Rasteinrichtung gedrückt und kann abgenommen werden.

## Patentansprüche

1. Transportroller mit mindestens einem oberendig mit einem Handgriff (2) versehenen Griffholm (1) an dessen unterem Ende ein mit Laufrollen (6) versehenen Trägerteil (4) zur Aufnahme eines faltbaren Behälters (7) angelenkt ist, dadurch gekennzeichnet, daß das Trägerteil (4) wannenförmig ausgebildet ist, daß der Behälter (7) etwa mittig mit einer Faltprägung (18) und einer an das Innere des Trägerteils (4) angepaßten steifen Bodenschale (19) aus Kunststoff versehen ist, und daß das Trägerteil (4) an seiner Frontwand (22) mit einer Rasteinrichtung (21) für die Bodenschale (19) versehen ist.

2. Transportroller nach Anspruch 1, dadurch gekennzeichnet, daß ein Deckel (17) zur Versteifung des unteren Bereichs des Behälters (7) sowie zur Abdeckung des Trägerteiles (4) bei eingefaltetem Zustand des Behälters (7) vorgesehen ist.

3. Transportroller nach Anspruch 1 oder 2, dadurch gekennzeichnet, daß der Griffholm (1) teleskopierbar und/oder faltbar ausgebildet ist, und daß der Behälter (7) an einem dem Handgriff (2) naheliegenden Bereich (12) des Griffholms (1) an einer Halterung (15) abnehmbar angelenkt ist.

4. Transportroller nach Anspruch 3, dadurch gekennzeichnet, daß die Halterung (15) in Form von zumindest einem Hohlpilz mit Schlitz ausgebildet ist, und daß der Behälter mit einer entsprechenden Öse versehen ist.

5. Transportroller nach einem der Ansprüche 3 bis 6, dadurch gekennzeichnet, daß der Deckel (17) im direkten Schwenkbereich (16) zum Trägerteil (4) am Griffholm (1) abnehmbar angelenkt ist.

## Claims

1. Transport trolley with at least one handle spar (1) which is equipped at its top end with a handle (2) and on the bottom end of which is articulated a carrier part (4) equipped with running wheels (6) and intended for receiving a foldable container (7), characterized in that the carrier part (4) is made trough-shaped, in that the container (7) is provided approximately centrally with an embossed folding line (18) and with a rigid plastic bottom tray (19) matching the interior of the carrier part (4), and in that the carrier part (4) is equipped, on its front wall (22), with a catch device (21) for the bottom tray (19).

2. Transport trolley according to Claim 1, characterized in that there is a lid (17) for reinforcing the lower region of the container (7) and for covering the carrier part (4) when the container (7) is folded in.

3. Transport trolley according to Claim 1 or 2, characterized in that the handle spar (1) is made so as to be telescopic and/or foldable, and in that the container (7) is articulated removably on a mounting (15) in a region (12) of the handle spar (1) located near the handle (2).

4. Transport trolley according to Claim 3, characterized in that the mounting (15) is in the form of at least one hollow mushroom with a slot, and in that the container is provided with a corresponding lug.

5. Transport trolley according to one of Claims 3 to 6, characterized in that the lid (17) is articulated removably on the handle spar (1) in the direct pivoting range (16) relative to the carrier part (4).

## Revendications

1. Chariot de transport, présentant au moins un montant de préhension (1) pourvu d'une poignée (2) à son extrémité supérieure et à l'extrémité inférieure duquel est articulée une partie de support (4) munie de roulettes (6) et destinée à recevoir un réceptacle repliable (7), caractérisé par le fait que la partie de support (4) est réalisée en forme d'auge ; par le fait que le réceptacle (7) est muni sensiblement en son centre d'une empreinte de pliage (18), ainsi que d'une coquille de fond rigide (19) en matière plastique s'adaptant à l'intérieur de la partie de support (4) ; et par le fait que la partie de support (4) est dotée, sur sa paroi antérieure (22), d'un dispositif d'encliquetage (21) pour la coquille de fond (19).

2. Chariot de transport selon la revendication 1, caractérisé par le fait qu'un couvercle (17) est prévu pour rigidifier la région inférieure du réceptacle (7), ainsi que pour recouvrir la partie de support (4) dans la condition du réceptacle (7) escamotée par pliage.

3. Chariot de transport selon la revendication 1 ou 2, caractérisé par le fait que le montant de préhension (1) est réalisé télescopique et/ou repliable ; et par le fait que le réceptacle (7) est articulé de manière libérable sur un système de retenue (15), dans une région (12) du montant de préhension (1) voisine de la poignée (2).

4. Chariot de transport selon la revendication 3, caractérisé par le fait que le système de retenue (15) est réalisé sous la forme d'au moins un champignon creux percé d'une fente ; et par le fait que le réceptacle est pourvu d'un œillet correspondant.

5. Chariot de transport selon l'une des revendications 3 à 6, caractérisé par le fait que le couvercle (17) est articulé de manière libérable sur le montant de préhension (1), dans la zone (16) de pivotement direct par rapport à la partie de support (4).

Fig. 1

0 125 337

_Fig. 2_

_Fig.3_

Fig. 4

4